# EUROPÄISCHE PATENTSCHRIFT

(11) **EP 0 534 237 B1**
(45) Veröffentlichungstag und Bekanntmachung des Hinweises auf die Patenterteilung: **27.11.1996**
(21) Anmeldenummer: 92115460.5
(22) Anmeldetag: 10.09.1992
(51) Int. Cl.: C08F 10/02, C08F 2/00

(54) **Ethylenhomopolymerisate und -copolymerisate sowie ein Verfahren zu ihrer Herstellung**
Polymers and copolymers of ethylene and process for their manufacture
Polymères et copolymères de l'éthylène et leur procédé de fabrication

(30) Priorität: 26.09.1991 DE 4132012
(43) Veröffentlichungstag der Anmeldung: 31.03.1993
(73) Patentinhaber: BASF Aktiengesellschaft, 67063 Ludwigshafen (DE)
(72) Erfinder: Muehlenbernd, Thomas, Dr., Dear State Minami Magome, 143 Tokyo (JP); Klimesch, Roger, Dr., W-6146 Alsbach-Haehnlein (DE); Koehler, Gernot, Dr., W-5309 Meckenheim (DE); Fischer, Ernst, Dr., W-6720 Speyer (DE)

(56) Entgegenhaltungen:
- EP-A- 0 121 755
- EP-A- 0 379 724
- EP-A- 0 394 794
- FR-A- 2 119 632

## Beschreibung

Die vorliegende Erfindung betrifft Ethylenhomopolymerisate und -copolymerisate aus überwiegenden Anteilen von Ethylen und untergeordneten Anteilen von mit Ethylen polymerisierbaren Comonomeren, welche durch radikalische Polymerisation der Monomeren bei Drücken von 500 bis 5000 bar und Reaktionstemperaturen T von über 40°C mittels eines Initiators unter praktischem Ausschluß von Sauerstoff in mindestens n = 3 Polymerisationsstufen herstellbar sind und eine Dichte von 925 bis 940 kg/m³ und einen Schmelzflußindex (Melt Flow Index, MFI) bei 190°c und einer Auflagekraft von 2,16 kp von < 1 g/10 min haben.

Des weiteren betrifft die vorliegende Erfindung ein Verfahren zur Herstellung dieser Ethylenhomopolymerisate und -co-polymerisate, sowie deren Verwendung zur Herstellung von Folien, Überzugsmaterialien und Photolacken.

Ethylenhomopolymerisate und -copolymerisate und ein Verfahren zu ihrer Herstellung sind aus der EP-A-0 394 794 bekannt. Sie sind erhältlich durch radikalische Polymerisation der Monomeren bei Drücken von 1500 bis 5000 bar und Reaktionstemperaturen T von 40 bis 250°C mittels eines Initiators unter praktischem Ausschluß von Sauerstoff in mindestens n = 3 Polymerisationsstufen. Hierbei unterwirft man in der ersten Stufe die Gesamtmenge oder den überwiegenden Teil der Monomeren mittels eines Teils des benötigten Initiators so lange der Polymersiation, bis sie praktisch zum Stillstand gekommen ist. Danach setzt man dem resultierenden um 20 bis 60°C abgekühlten Gemisch einen weiteren Teil des Initiators und gegebenenfalls der Monomeren zu und wiederholt diesen Vorgang in den Folgestufen bis zur n-ten Stufe. Wesentlich für dieses bekannte Verfahren ist, daß die in der (n-1)-ten Stufe verwendeten Initiatoren eine Halbwertstetrperatur von 80 bis 160°C aufweisen. Diese bekannten Ethylenhomopolymerisate und -copolymerisate sind indes vergleichsweise niedermolekular und leicht fließend mit Schmelzindices von 2,5 bis 3,5. Will man das aus der EP-A-0 394 794 bekannte Verfahren auf die Herstellung höhermolekularer, weniger leicht fließender Homopolymerisate und -copolymerisate übertragen, kommt es in den Reaktoren regelmäßig zu explosiven Ethylenzersetzungen, welche die sichere und zuverlässige Durchführung der Polymerisation verhindern.

Aus der EP-A-0 394 794 geht außerdem hervor, daß die n-te Polymerisationsstufe auch durch einen Initiator mit einer Halbwertstemperatur von bis zu 250°C ausgelöst werden kann. Beispielhaft werden tert.-Butyl-perbenzoat und Methylisobutylketonhydroperoxid genannt.

Indes erscheint die Verwendung dieser Initiatoren im Hinblick auf die Vergleichsbeispiele B und E der EP-A-0 394 794 als nachteilig. So führt die alleinige Verwendung von Methylisobutylketonhydroperoxid bei der dreistufigen Polymerisation mit maximalen Reaktionstemperaturen von weniger als 240°C zu Ethylenhomopolymerisaten einer Dichte von weniger als 925 kg/m³ und einem Schmelzflußindex von 3,0 g/10 min. Ersetzt man dagegen in einer dreistufigen Polymerisation in der (n-1)-ten und der n-ten Stufe die Initiatoren mit niedriger Halbwertstemperatur durch Methylisobutylketonhydroperoxid und führt die Polymerisation so, daß die maximalen Reaktionstemperaturen Tₘₐₓ unterhalb von 270°C liegen, dann weisen die resultierenden Ethylenhomopolymerisate lediglich Dichten von weniger als 921,5 kg/m³ auf.

Der Erfindung lag die Aufgabe zugrunde, den geschilderten Nachteilen des aus der EP-A-0 394 794 bekannten Verfahrens abzuhelfen und unter apparativ und verfahrenstechnisch vertretbarem Aufwand Ethylenhomopolymerisate und -copolymerisate mit Dichten von 925 bis 940 kg/m³, einem Schmelzflußindex (Melt Flow Index, MFI) bei 190°C und einer Auflagekraft von 2,16 kp von < 1 g/10 min und guten optischen Eigenschaften mit hohem Umsatz herzustellen. Darüber hinaus sollen diese neuen Ethylenhomopolymerisate und -copolymerisate mechanisch feste und stark dehnbare Folien mit vorzüglichen optischen Eigenschaften liefern.

Diese Aufgabe konnte in eleganter und wirtschaftlicher Weise dadurch gelöst werden, daß man in der letzten Stufe einer mehrstufigen Polymerisation Initiatoren einer Halbwertstemperatur von 90 bis 260°C verwendet und daß die maximale Reaktionstemperatur Tₘₐₓ zumindest in dieser letzten Stufe bei oder oberhalb 270°C liegt. Im Hinblick auf die EP-A-0 394 794 stand es nicht zu erwarten, daß die Lösung der Aufgabe, welche der vorliegenden Erfindung zugrundeliegt, mit Hilfe dieser beiden Maßnahmen gelingen konnte.

Demgemäß handelt es sich bei dem Gegenstand der vorliegenden Erfindung um Ethylenhomopolymerisate und -copolymerisate mit einer Dichte von 925 bis 940 kg/m³ und einem Schmelzflußindex (Melt Flow Index, MFI) bei 190°C und einer Auflagekraft von 2,16 kp von < 1 g/10 min, welche durch radikalische Polymerisation der Monomeren bei Drücken von 500 bis 5000 bar und Reaktionstemperaturen von 40 bis 320°C mittels eines Initiators unter praktischem Ausschluß von Sauerstoff in mindestens n = 3 Polymerisationsstufen herstellbar sind, wobei man in der ersten Stufe die Gesamtmenge oder den überwiegenden Teil der Monomeren mittels eines Teils des benötigten Initiators solange der Polymerisation unterwirft, bis diese praktisch zum Stillstand kommt, danach dem um 20 bis 60°C unter Tₘₐₓ, abgekühlten Gemisch einen weiteren Teil des Initiators und gegebenenfalls der Monomeren zusetzt und diesen Vorgang in den Folgestufen bis zur n-ten Stufe wiederholt, mit den Maßgaben, daß zumindest die in der n-ten Stufe verwendeten Initiatoren eine Halbwertstemperatur von 90 bis 260°C aufweisen und daß die maximale Reaktionstemperatur Tₘₐₓ zumindest in der n-ten Stufe bei oder oberhalb 270°C liegt.

Im folgenden werden diese Ethylenhomopolymerisate und -copolymerisate der Kürze halber als "erfindungsgemäße Polymerisate" bezeichnet.

Das zur Herstellung der erfindungsgemäßen Polymerisate angewandte Verfahren läßt sich sowohl für die Homopolymerisation als auch für die Copolymerisation von Ethylen mit anderen Monomeren verwenden, unter der Voraussetzung, daß diese Monomeren unter Hochdruck mit Ethylen radikalisch copolymerisieren. Beispiele geeigneter copolymerisierbarer Monomere sind α,β-ethylenisch ungesättigte C₃- bis C₈-Carbonsäuren, insbesondere Maleinsäure, Fumarsäure, Itaconsäure, Acrylsäure, Methacrylsäure und Crotonsäure, α,β-ethylenisch ungesättigte C₄- bis C₁₅-Carbonsäureester oder -anhydride, insbesondere Methylmethacrylat, Ethylacrylat, n-Butylacrylat, Methacrylsäureanhydrid, Maleinsäureanhydrid und Itaconsäureanhydrid. Der Comonomergehalt in den erfindungsgemäßen Copolymerisaten sollte 40, insbesondere 20 Gew.-%, nicht übersteigen.

Die Polymerisation wird bei Drücken von 500 bis 5000 bar durchgeführt, wobei Drücke zwischen 1500 und 3500 bar von Vorteil sind. Die Reaktionstemperaturen T liegen oberhalb 40°C. Hierbei ist es von Vorteil, wenn die Reaktionstemperaturen T 320, insbesondere 300°C, nicht überschreiten.

Die Polymerisation wird in ihrer ersten Stufe durch Zugabe von radikalisch zerfallenden Initiatoren gestartet. Beispiele geeigneter Initiatoren sind organische Peroxide wie Peroxyester, Peroxyketone, Peroxyketale und Peroxycarbonate; Azodicarbonsäureester, Azodicarbonsäuredinitrile sowie radikalisch zerfallende Kohlenwasserstoffe, welche auch als C-C-Starter bezeichnet werden.

Beispiele gut geeigneter Initiatoren sind Di-2-ethylhexyl-peroxydicarbonat, Dicyclohexyl-peroxydicarbonat, Diacetylperoxydicarbonat, Cumyl-perneodecanoat, tert.-Amyl-perpivalat, tert.-Butyl-perneodecanoat, tert.-Butyl-permaleinat, tert.-Butyl-perpivalat, tert.-Butyl-perisononanoat, Diisopropylbenzolhydroperoxid, Cumolhydroperoxid, tert.-Butylperbenzoat, Methylisobutylketonhydroperoxid, 2,2-Bis-(tert.-butylperoxy)-butan, Azobisisobutyronitril und 1,2-Diphenyl-1,2-dimethyl-ethan- und 1,1,2,2-Tetramethylethan-Derivate. Die Initiatoren können einzeln oder als Gemisch in Konzentrationen von 0,5 bis 100 und insbesondere 0,5 bis 50 ppm/h, bezogen auf die Monomermenge, angewandt werden. Hierbei ist es von Vorteil, die Initiatoren im gelösten Zustand zu verwenden. Beispiele geeigneter Lösungsmittel sind aliphatische Kohlenwasserstoffe, insbesondere Octan und Isodecan.

Erfindungsgemäß ist es von Vorteil, für die erste Stufe der Polymerisation Initiatoren zu verwenden, welche eine Halbwertstemperatur von 80 bis 160°C aufweisen. Unter der Halbwertstemperatur ist diejenige Temperatur zu verstehen, bei welcher die Hälfte des in Benzol gelösten Initiators innerhalb einer Minute zerfällt. Hierbei erweisen sich tert.-Butyl-perpivalat und tert.-Butyl-perisononanoat als besonders vorteilhaft und werden deshalb ganz besonders bevorzugt verwendet.

Für das Verfahren zur Herstellung der erfindungsgemäßen Polymerisate ist es wesentlich, daß zumindest die in der letzten, d.h. n-ten Stufe, verwendeten Initiatoren eine Halbwertstemperatur von 90 bis 260°C aufweisen. Beispiele geeigneter Initiatoren mit diesen Halbwertstemperaturen sind Diisopropylbenzolhydroperoxid, Cumolhydroperoxid, tert.-Butyl-perbenzoat, Methylisobutylketonhydroperoxid, 2,2-Bis-(tert.-butylperoxy)-butan und 2,3-Dimethyl-2,3-diphenylbutan, von denen Methylisobutylketonhydroperoxid besonders vorteilhaft ist und deshalb ganz besonders bevorzugt verwendet wird.

Bei dem Verfahren zur Herstellung der erfindungsgemäßen Polymerisate kann deren Molmasse wie üblich durch Zugabe von Reglern kontrolliert werden. Beispiele geeigneter Regler sind aliphatische Kohlenwasserstoffe, Ketone und Aldehyde, von denen Propionaldehyd besonders vorteilhaft ist und deshalb ganz besonders bevorzugt verwendet wird.

Das Verfahren zur Herstellung der erfindungsgemäßen Polymerisate wird unter praktischem Ausschluß von Sauerstoff in mindestens drei aufeinanderfolgenden Stufen ausgeführt, wobei die Polymerisation in jeder Stufe durch Zugabe der entsprechenden Initiatoren wieder neu gestartet werden muß. Für die Durchführung eignen sich u.a. Rohrreaktoren, welche mit einer Reihe von Einlaßstellen für den Initiator sowie gegebenenfalls für die Zufuhr weiterer Monomermengen versehen sind. Im allgemeinen weist der Rohrreaktor ein Verhältnis von Länge zu Durchmesser von mindestens 1000, vorzugsweise von mehr als 2000, bei einer Länge von 50 bis 1000 m auf. Vorteilhafterweise ist der Rohrreaktor in gewundender Form angeordnet. Die bei der Polymerisation frei werdende Reaktionswärme wird im allgemeinen durch Kühlung der Reaktorwand mit Wasser von außen her abgeführt. Gegebenenfalls kann dem Rohrreaktor auch ein Reaktor mit Rückvermischung, insbesondere ein Rührautoklav, vorgeschaltet werden. In diesem Fall ist es möglich, das aus dem Rührreaktor austretende Gemisch vor Eintritt in den Rohrreaktor mit Hilfe eines Wärmeaustauschers abzukühlen. In der Regel wird aber das Verfahren ohne Wärmeaustauscher durchgeführt. Die bei dem Verfahren verwendeten Reaktoren enthalten im allgemeinen eine Reihe von Temperaturmeßgeräten im Reaktorinneren, so daß der Temperaturverlauf während der Polymerisation beobachtet werden kann.

Hierbei ist es für das Verfahren zur Herstellung der erfindungsgemäßen Polymerisate wesentlich, daß die maximale Reaktionstemperatur Tₘₐₓ zumindest in der letzten, d.h. n-ten Stufe, der Polymerisation bei oder oberhalb 270°C liegt. Hierbei soll Tₘₐₓ im allgemeinen 320, insbesondere 300°C nicht überschreiten.

In einer bevorzugten Ausführungsform des Verfahrens zur Herstellung der erfindungsgemäßen Polymerisate wird das Reaktionsgemisch aus Ethylen und einem Regler sowie gegebenenfalls mindestens einem Comonomeren zunächst auf einen Druck von mehr als 500, insbesondere 1500 bar, komprimiert, auf über 100°C erhitzt und anschließend zusammen mit einem Teil des Initiators in einen Rohrreaktor eingespeist, wo die Polymerisation nach Zerfall des Initiators rasch anspringt. Die Reaktorkühlung soll dabei so eingestellt werden, daß in der ersten bis zur vorletzten, d.h. (n-1)-ten Stufe ein Tₘₐₓ von 320°C im Rohrinneren nicht überschritten wird. Längs des Rohrreaktors stellt sich schon nach kurzer Zeit ein vom Polymerisationsumsatz abhängiges Temperaturprofil ein. Das Abklingen der Reaktion zeigt sich dabei durch ein Absinken der Temperatur im Rohrinneren. Beim Erreichen einer um 20 bis 60°C unterhalb von Tₘₐₓ liegenden Temperatur wird die Polymerisation durch Zugabe von weiteren Initiatormengen erneut gestartet. Dies hat zur Folge, daß die Temperatur zunächst wieder deutlich ansteigt, wobei durch geeignete Kühlmaßnahmen dafür gesorgt werden muß, daß Tₘₐₓ in dem gewünschten Bereich liegt. Durch erneutes Einspeisen von weiteren Initiatoren läßt sich dieser Vorgang längs des Reaktionsrohres beliebig oft (n-mal) wiederholen. Dadurch bilden sich im Reaktor eine Reihe von verschiedenen Polymerisationsstufen aus, welche alle durch ein bestimmtes Temperaturmaximum Tₘₐₓ gekennzeichnet sind. Für das Verfahren zur Herstellung der erfindungsgemäßen Polymerisate ist es wesentlich, daß die Polymerisation in mindestens drei Stufen erfolgt.

Bei dem Verfahren zur Herstellung der erfindungsgemäßen Polymerisate kann dem Reaktionsgemisch am gleichen Ort oder auch hiervon räumlich getrennt neben dem Initiator entweder noch kaltes oder vorgewärmtes Ethylen und/oder kalte oder vorgewärmte Comonomere zugesetzt werden.

Im allgemeinen liegt die mittlere Verweilzeiten des Reaktionsgemischs im Rohrreaktor zwischen 30 und 300, insbesondere 30 und 120 Sekunden.

Nach dem Austragen des Reaktionsgemischs wird das erfindungsgemäße Polymerisat durch Entspannen von verbrauchtem Ethylen und gegebenenfalls unverbrauchtem Comonomer getrennt, wonach man die Monomeren im allgemeinen in den Reaktor zurückführt.

Dieses Verfahren zur Herstellung der erfindungsgemäßen Polymerisate kann in analoger Weise auch in einem Reaktor mit Rückvermischung und einem nachgeschalteten Rohrreaktor durchgeführt werden. In diesem Fall sollte Tₘₐₓ im Reaktor mit Rückvermischung 230°C nicht überschreiten. Nach dem Abklingen der Polymerisation wird das Polymerisationsgemisch zusammen mit noch unverbrauchten Monomeren durch ein Hochdruckrohr, welches gegebenenfalls noch mit einem Wärmeaustauscher verbunden ist, in den Rohrreaktor eingebracht, wo das Verfahren, wie vorstehend beschrieben, weitergeführt wird. Im allgemeinen beträgt die mittlere Verweilzeit des Gemischs im Reaktor mit Rückvermischung 10 bis 100, insbesondere 10 bis 30 Sekunden, im Rohrreaktor 10 bis 200, insbesondere 10 bis 100 Sekunden.

In dieser Weise lassen sich die erfindungsgemäßen Polymerisate sicher und exakt reproduzierbar herstellen, ohne daß es in den Reaktoren zu einer explosionsartigen Zersetzung des Ethylens kommt. Die erfindungsgemäßen Polymerisate weisen Dichten von 925 bis 940 kg/m³ auf. Ihr Schmelzflußindex gemäß DIN 53 735 ist kleiner als 1, insbesondere kleiner 0,5 g/10 min. Folien, welche aus den erfindungsgemäßen Polymerisaten hergestellt werden, weisen ein gutes Spleißvermögen und hervorragende optische Eigenschaften auf. Dies zeigt sich insbesondere an den relativ geringen Streulichtanteilen (nach DIN 53 490) und den erhöhten Glanzwerten (nach DIN 67 530). In der vorstehend beschriebenen Weise ist es möglich, erfindungsgemäße Polymerisate mit Dichten über 925 kg/m³ bei Umsätzen von mehr als 25 % herzustellen. Ein weiterer Vorteil besteht darin, daß man die in der Hochdrucktechnik üblichen Reaktoren verwenden kann, also daß man beispielsweise nicht auf Reaktoren mit wechselnden Querschnitten, sogenannten Teleskopreaktoren, angewiesen ist und das Verfahren ohne besonderen technischen Aufwand durchführen kann. Deshalb erhält man im Gegensatz zu dem Verfahren der DE-A-27 48 263 auch dann die erfindungsgemäßen Polymerisate, wenn das Reaktionsgemisch mit deutlich kleineren Strömungszahlen als 0,307 m²/sec durch den Reaktor fließt. Nicht zuletzt aber weisen die erfindungsgemäßen Polymerisate ausgezeichnete mechanische Eigenschaften auf, was sich an ihrer hohen Reißdehnung, Durchstoßfestigkeit und den sogenannten nach ASTM D-1709-A gemessenen "dart drop impact"-Werten (DDI) bemerkbar macht.

Die erfindungsgemäßen Polymerisate können vorteilhaft zur Herstellung von Folien, Überzugsmaterialien und Photolacken verwendet werden.

### Beispiele und Vergleichsversuche

Die Beispiele 1 bis 7 und die Vergleichsversuche A und B wurden in einem röhrenförmigen Reakzionsgefäß mit einer Länge von 560 m und einem Verhältnis von Länge zu Durchmesser von 37000 durchgeführt. Die Polymerisationsinitiatoren wurden in aliphatischen Kohlenwasserstoffen gelöst mittels Rochdruckkolbenpumpen direkt den Einspeisestellen des Rohrreaktors zugeführt. Hierbei legte die Lage der Einspeisestellen die Lage der Reaktionszonen im Reaktionsgefäß fest. Das sauerstoffreie Ethylen wurde in mehreren Stufen auf den jeweiligen Reaktionsdruck komprimiert, mit einem Molmasseregler versetzt und den Einlaßstellen des Rohrreaktors zugeführt. Als Molmasseregler wurde Propionaldehyd oder Propan verwendet.

Die bei der Polymerisation freiwerdende Reaktionswärme wurde der Reaktionsmischung durch einen mit Wasserdampf gespeisten Kühlmittelkreislauf entzogen. Das resultierende Polymerisat wurde in üblicher und bekannter Weise in den dem Reaktor nachgeschalteten Abscheidern von nicht umgesetztem Ethylen und anderen niedermolekularen Verbindungen abgetrennt und über einen Extruder und Granulator ausgetragen und konfektioniert. Unumgesetztes Ethylen wurde in mehreren Stufen gereinigt und auf die Saugseite der Verdichter zurückgeführt.

Die anwendungstechnischen Eigenschaften der resultierenden Polymerisate wurde nach den folgenden Methoden bestimmt:
- der Schmelzflußindex (Melt Flow Index, MFI) bei einer Temperatur von 190°C und einer Auflagekraft von 2,16 kp nach DIN 53 735;
- die Dichte nach DIN 53 479.

Aus den Polymerisaten wurde in üblicher und bekannter Weise Blasfolien hergestellt, deren anwendungstechnische Eigenschaften nach den folgenden Methoden bestimmt wurden:
- die Lichtstreuung der Folie nach DIN 53 490
- der Glanz der Folie nach DIN 67 530
- die Reißdehnung der Folie nach DIN 53 455
- die Durchstoßfestigkeit der Folie nach DIN 53 373
- der "dart drop impact" nach ASTM D-1709-A.

Die Aufziehfähigkeit der Blasfolie wurde in üblicher und bekannter Weise bei der Herstellung der betreffenden Folie durch Extrusion, Folienblasen, Abziehen der Folie und Aufwickeln bestimmt. Hierbei wurde die Abzugsgeschwindigkeit, mit welcher die Blasfolie aus der Blasvorrichtung abgezogen wurde, stufenweise erhöht, bis es zum Folienriß kam.

### Beispiel 1

### Die Herstellung eines erfindungsgemäßen Ethylenhomopolymerisats und seine Weiterverarbeitung zu einer Blasfolie

3,2 t/h Ethylen wurden mit 1,7 l/h Propionaldehyd versetzt, auf 3000 bar komprimiert, in einem Vorwärmer auf 140°C erwärmt und dem Eingang eines Rohrreaktors zugeführt. Der Einlaßstelle des Reaktors wurden 8 ppm/h tert.-Butyl-perpivalat und 15 ppm/h tert.-Butyl-perisononanoat in Isodecan gelöst zugeführt. Auf diese Weise wurde die Polymerisation gestartet. An der zweiten Einspeisestelle des Rohrreaktors, an welcher die Reaktionstemperatur nach dem ersten Temperaturmaximum wieder auf 220°C abgesunken war, wurden 23 ppm/h tert.-Butyl-perisononanoat, und an der dritten Einspeisestelle, an welcher das zweite Temperaturmaximum abgeklungen war, wurden 12 ppm/h tert.-Butyl-perisononanoat und 5 ppm/h Methylisobutylketonhydroperoxid zugeführt. In den ersten beiden Polymerisationsstufen lag Tₘₐₓ unter 265°c; in der dritten Stufe lag Tₘₐₓ bei 285°C.

Das resultierende erfindungsgemäße Ethylenhomopolymerisat wurde in Hoch- und Niederdruckabscheidern vom Ethylen und niedermolekularen Verunreinigungen in üblicher und bekannter Weise befreit, in Bunkern zwischengelagert und zu Blasfolien verarbeitet.

Die Tabelle 1 gibt Auskunft über den Umsatz der Reaktion, die physikalisch-chemischen Eigenschaften des erfindungsgemäßen Ethylenhomopolymerisats und die anwendungstechnischen Eigenschaften der hieraus hergestellten Blasfolie. Wegen seiner ausgezeichneten optischen und mechanischen Eigenschaften eignete sich das erfindungsgemäße Ethylenhomopolymerisat hervorragend für die Herstellung von Schwergutverpackungen und Kleinhohlkörpern sowie für die Herstellung von Kabelummantelungen für Niederspannungskabel.

### Beispiel 2

### Die Herstellung eines erfindungsgemäßen Ethylenhomopolymerisats und seine Weiterverarbeitung zu einer Blasfolie

3,2 t/h Ethylen wurde mit 2,5 Nm³/h Propan versetzt, auf 3000 bar komprimiert und in einem Vorwärmer auf 145°C erwärmt und dem Eingang eines Rohrreaktors zugeführt. Der Einlaßstelle des Reaktors wurden außerdem 9 ppm/h tert.-Butylperoxypivalat und 17 ppm/h tert.-Butyl-peroxyisononanoat in Isodecan gelöst zugeführt. In dieser Weise wurde die Polymerisation gestartet.

An der zweiten Einspeisestelle des Rohrreaktors, an welcher die Reaktionstemperatur nach dem ersten Maximum wieder auf 220°C abgesunken war, wurden 25 ppm/h tert.-Butyl-perisononanoat, und an der dritten Einspeisestelle, an welcher das zweite Temperaturmaximum abgeklungen war, wurden 14 ppm/h tert.-Butyl-perisononanoat und 6 ppm/h Methylisobutylketonhydroperoxid zugeführt. Die Temperaturmaxima Tₘₐₓ der ersten beiden Stufen lagen dabei unterhalb von 265°C; Tₘₐₓ der 3. Stufe lag bei 280°C.

Das resultierende Polymer wurde wie bei Beispiel 1 angegeben isoliert, zwischengelagert, untersucht und weiterverarbeitet. Der Reaktionumsatz, die Dichte, der Schmelzflußindex und die anwendungstechnischen Eigenschaften der hieraus hergestellten Blasfolien finden sich gleichfalls in der Tabelle.

Wie bei Beispiel 1 bereitete die Durchführung der Reaktion keinerlei Schwierigkeiten und es kam auch nicht zu den gefürchteten explosionsartigen Zersetzungen des Ethylens. Wegen seiner ausgezeichneten mechanischen und optischen Eigenschaften eignete sich das erfindungsgemäße Ethylenhomopolymerisat vorzüglich für die Herstellung von Hochspannungskabelummantelungen, Schwergutverpackungen, Kleinhohlkörper für den medizinischen Bereich und Kaschierfolien.

### Beispiel 3

### Die Herstellung eines erfindungsgemäßen Ethylenhomopolymerisats und seine Weiterverarbeitung zu einer Blasfolie

3,2 t/h Ethylen wurden mit 1,5 l/h Propionaldehyd und 5000 ppm/h n-Butylacrylat versetzt und auf 3000 bar komprimiert, in einem Vorwärmer auf 140°C gebrachtund dem Eingang eines Rohrreaktors zugeführt. Der Einlaßstelle des Reaktors wurden 8 ppm/h tert.-Butyl-perpivalat und 15 ppm/h tert.-Butyl-perisononanoat gelöst in Isodecan zugeleitet. Auf diese Weise wurde die Polymerisation gestartet.

An der zweiten Einspeisestelle des Rohrreaktors, an welcher die Reaktionstemperatur nach dem ersten Temperaturmaximum wieder auf 220°C abgesunken war, wurden 22 ppm/h tert.-Butyl-perisononanoat, und an der dritten Einspeisestelle, an welcher das zweite Temperaturmaximum abgeklungen war, wurden 10 ppm/h Methylisobutylketonhydroperoxid zugeführt. Die maximalen Reaktionstemperaturen Tₘₐₓ der ersten beiden Polymerisationsstufen lagen unterhalb von 265°C; Tₘₐₓ der 3. Stufe lag bei 290°C.

Das resultierende erfindungsgemäße Ethylenhomopolymerisat wurde wie in den Beispielen 1 und 2 beschrieben isoliert, zwischengelagert, untersucht und weiterverarbeitet.

Die das vorliegende Beispiel betreffenden Daten finden sich gleichfalls in der Tabelle. Sie untermauern die Vorteilhaftigkeit der erfindungsgemäßen Polymerisate: Das erfindungsgemäße Ethylenhomopolymerisat des Beispiels 3 war für alle in den Beispielen 1 und 2 angegebenen Verwendungszwecke hervorragend geeignet.

### Beispiel 4

### Die Herstellung eines erfindungsgemäßen Ethylenhomopolymerisats und seine Weiterverarbeitung zu einer Blasfolie

1,6 t/h Ethylen wurde mit 0,85 l/h Propionaldehyd versetzt, auf 3000 bar komprimiert, in einem Vorwärmer auf 140°C erwärmt und dem Eingang eines Rohrreaktors zugeführt. Der Einlaßstelle des Reaktors wurden 3,5 ppm/h tert.-Butyl-perpivalat und 7 ppm/h tert.-Butyl-perisononanoat in Isodecan gelöst zugeführt. In dieser Weise wurde die Polymerisation gestartet. An der zweiten Einspeisestelle des Rohrreaktors, an welcher die Reaktionstemperatur wieder auf 240°C abgesunken war, wurde die Reaktionsmischung durch Zuführung von 1,6 t/h vorgewärmtem, mit 0,85 l/h Propionaldehyd versetztem und auf 3000 bar komprimiertem Ethylen abgekühlt und mit 6 ppm/h tert.-Butyl-perpivalat und 12 ppm/h tert.-Butyl-perisononanoat gelöst in Isodecan versetzt. Nachdem die zweite Reaktionszone durchschritten und die Temperatur auf 220°C abgefallen war, wurde an der dritten Einspeisestelle eine Mischung aus 13 ppm/h tert.-Butyl-perisononanoat und 6 ppm/h Methylisobutylketonhydroperoxid zugeführt, wodurch eine Nachreaktion eingeleitet wurde. Tₘₐₓ der ersten und zweiten Stufe lagen unterhalb von 265°C; Tₘₐₓ der dritten Stufe lag bei 280°C.

Das resultierende erfindungsgemäße Ethylenhomopolymerisat wurde wie bei den Beispielen 1 bis 3 beschrieben isoliert, zwischengelagert, untersucht und weiterverarbeitet. Die betreffenden Daten finden sich ebenfalls in der Tabelle. Sie zeigen, daß auch das erfindungsgemäße Polymerisat des Beispiels 4 hervorragende anwendungstechnische Eigenschaften aufwies und für alle in den vorangegangenen Beispielen aufgeführten Anwendungszwecke hervorragend geeignet war.

### Beispiel 5

### Die Herstellung eines erfindungsgemäßen Ethylenhomopolymerisats und seine Weiterverarbeitung zu einer Blasfolie

1,6 t/h Ethylen wurden mit 1,3 Nm³/h Propan versetzt, auf 3000 bar komprimiert, in einem Vorwärmer auf 145°C erwärmt und dann dem Eingang eines Rohrreaktors zugeführt. Der Einlaßstelle des Reaktors wurden außerdem 4 ppm/h tert.-Butyl-perpivalat und 8 ppm/h tert.-Butyl-perisononanoat in Isodecan gelöst zugeleitet. Auf diese Weise wurde die Polymerisation gestartet.

An der zweiten Einspeisestelle des Rohrreaktors, an welcher die Reaktionstemperatur nach dem ersten Temperaturmaximum Tₘₐₓ auf 240°C abgesunken war, wurde die Reaktionsmischung durch Zuführung von 1,6 t/h auf 125°C vorgewärmtem, mit 1,3 Nm³/h Propan versetztem und auf 3000 bar komprimiertem Ethylen abgekühlt und mit 2 ppm/h tert.-Butyl-perpivalat und 11 ppm/h tert.-Butyl-perisononanoat in Isodecan gelöst versetzt. Nachdem die zweite Reaktionszone durchschritten und die Temperatur auf 220°C abgesunken war, wurde an der dritten Initiatoreinspeisestelle eine Mischung aus 14 ppm/h tert.-Butyl-perisononanoat und 7 ppm/h Methylisobutylketonhydroperoxid in Isodecan gelöst zugeführt, und es wurde auf diese Weise eine Nachreaktion eingeleitet. Die Temperaturmaxima Tₘₐₓ der ersten beiden Polymerisationsstufen lagen unterhalb von 265°C; Tₘₐₓ der dritten Polymerisationsstufe lag dagegen bei 285°C.

Das in dieser Weise hergestellte erfindungsgemäße Ethylenhomopolymerisat wurde wie in den vorangegangenen Beispielen beschrieben, isoliert, zwischengelagert, untersucht und weiterverarbeitet. Die betreffenden Daten finden sich ebenfalls in der Tabelle. Sie sind ein weiterer Beleg für die Vorteilhaftigkeit der erfindungsgemäßen Polymerisate: ebenso wie die erfindungsgemäßen Polymerisate der Beispiele 1 bis 4 kommen die des Beispiels 5 für alle angegebenen Verwendungszwecke, insbesondere im medizinischen Bereich, in Betracht. Bei der Durchführung der Polymerisationsreaktion selbst wurden wie in den vorangegangenen Beispielen keinerlei Ethylenzersetzungen beobachtet.

### Beispiel 6

### Die Herstellung eines erfindungsgemäßen Ethylenhomopolymerisat und seine Weiterverarbeitung zu einer Blasfolie

1,6 t/h Ethylen wurden mit 5000 ppm/h n-Butylacrylat und 9,75 l/h Propionaldehyd versetzt, auf den Reaktionsdruck von 300 bar komprimiert, in einen Vorwärmer auf 140°C erwärmt und dem Eingang eines Rohrreaktors zugeführt. Der Einlaßstelle des Reaktors wurden außerdem 3 ppm/h tert.-Butyl-perpivalat und 7 ppm/h tert.-Butyl-perisononanoat in Isodecan gelöst zugeleitet. Auf diese Weise wurde die Polymerisation gestartet.

An der zweiten Einspeisestelle des Rohrreaktors, an welcher die Temperatur nach dem ersten Temperaturmaximum Tₘₐₓ auf 240°C abgesunken war, wurde das Reaktionsgemisch durch Zuführen von 1,6 t/h mit 5000 ppm/h n-Butylacrylat und 0,75 1/ h Propionaldehyd versetztem, auf 3000 bar komprimiertem und auf 180°C vorgewärmtem Ethylen abgekühlt und mit 2 ppm/h tert.-Butyl-perpivalat und 10 ppm/h tert.-Butyl-perisononanoat in Isodecan versetzt. Nachdem die zweiten Reaktionszone durchschritten und die Temperatur wieder auf 220°C abgesunken war, wurde an der dritten Initiatoreinspeisestelle eine Mischung aus 12 ppm/h tert.-Butyl-perisononanoat und 6 ppm/h Methylisobutylketonhydroperoxid in Isodecan gelöst zugeleitet, wodurch eine Nachreaktion gestartet wurde. Die maximalen Reaktionstemperaturen Tₘₐₓ der ersten und der zweiten Reaktionszone lagen dabei unterhalb von 260°C; Tₘₐₓ der dritten Polymerisationsstufe lag bei 280°C.

Das in dieser Weise erhaltene erfindungsgemäße Polymerisat wurde, wie in den vorangegangenen Beispielen beschrieben, isoliert, zwischengelagert, untersucht und weiterverarbeitet. Die betreffenden Daten finden sich in der Tabelle. Sie belegen, daß auch dieses erfindungsgemäße Polymerisat die gleichen hervorragenden anwendungstechnischen Eigenschaften aufwies, wie die erfindungsgemäßen Polymerisate der Beipsiele 1 bis 5.

### Beispiel 7

### Die Herstellung eines erfindungsgemäßen Ethylenhomopolymerisats und seine Weiterverarbeitung zu einer Blasfolie

Beispiel 1 wurde wiederholt, nur daß anstelle von Methylisobutylketonhydroperoxid der C-C-Starter 2,3-Dimethyl-2,3-di-phenylbutan verwendet wurde. Dieser Initiator wurde in einer Menge von 2 ppm/h in Isodecan bei der zweiten und in einer Menge von 3,5 ppm/h bei der dritten Einspeisestelle zudosiert. Das resultierende erfindungsgemäße Ethylenhomopolymerisat wurde wie in den vorangegangenen Beispielen isoliert, zwischengelagert, untersucht und weiterverarbeitet. Die betreffenden Daten finden sich ebenfalls in der Tabelle. Sie machen deutlich, daß das erfindungsgemäße Polymerisat des Beispiels 8 sehr gut für alle in den vorangegangenen Beispielen genannten Anwendungszwecke geeignet ist. Was die Verfahrensdurchführung betrifft, kommt es wegen der Verwendung des C-C-Starters auch zu keiner Ethylenzersetzung.

### Vergleichsversuch A

### Die Herstellung eines bekannten Ethylencopolymerisats und seine Weiterverarbeitung zu einer Blasfolie

Das Vergleichsbeispiel B der EP-A-0 394 794 wurde wiederholt. Hierzu wurden 2,3 t/h Ethylen zusammen mit 2 l/h Propionaldehyd in einem Hochdrucknachverdichter auf 2800 bar komprimiert, auf 145°C erwärmt und in einen Rohrreaktor eingespeist. Die Polymerisation wurde durch Zugabe von 4,8 ppm/h tert.-Butyl-perpivalat und 3,8 ppm/h Methylisobutylketonhydroperoxid ausgelöst, welche man an der Einlaßstelle des Rohrreaktors dem Monomeren hinzusetzte. Nach dem Abklingen des Temperaturmaximums Tₘₐₓ und dem Abklingen der Reaktion wurde die Polymerisation durch zweimalige Zugabe von jeweils 3,4 ppm/h tert.-Butyl-perpivalat und durch einmalige Zugabe von 2,2 ppm/h Methylisobutylketonhydroperoxid jeweils neu initiiert, so daß sich insgesamt vier Temperaturmaxima Tₘₐₓ ausbildeten, welche alle 240°C nicht überschritten. Ansonsten wurde das resultierende bekannte Ethylenhomopolymerisat wie bei den Beispielen 1 bis 8 beschrieben isoliert, zwischengelagert, untersucht und weiterverarbeitet. Die betreffenden Daten werden in der Tabelle den Daten der erfindungsgemäßen Ethylenhomopolymerisate gegenübergestellt. Die Daten zeigen, daß das bekannte Ethylenhomopolymerisat eine geringere Dichte und einen höheren Schmelzflußindex aufwies als die erfindungsgemäßen Polymerisate. Darüber hinaus hatte es als Folie deutlich schlechtere anwendungstechnische Eigenschaften als die Folien der Beispiele 1 bis 8.

### Vergleichsversuch B

Für den Vergleichsversuch B wurde das Vergleichsbeispiel E der EP-A-0 394 794 nachgearbeitet. Hierzu wurden 1,4 t/h Ethylen zusammen mit 1,4 l/h Propionaldehyd in einem Hochdrucknachverdichter auf 2800 komprimiert und mit einer Gaseingangstemperatur von 30°C in einen Rührautoklaven eingespeist. Die Polymerisation wurde durch 10,4 ppm/h tert.-Butyl-perpivalat initiiert, und der Inhalt des Autoklaven wurde mit Hilfe eines Rührers mit einer Geschwindigkeit von 1300 UpM durchmischt. Die mittlere Verweilzeit betrug dabei 25 Sekunden. Im Autoklaven lag das Temperaturmaximum Tₘₐₓ bei 211°C.

Anschließend wurde das Reaktionsgemisch über ein isoliertes Hochdruckrohr in den Rohrreaktor eingeführt. An der Einlaßstelle fügte man 1,65 ppm/h Methylisobutylketonhydroperoxid hinzu. Nach dem Abklingen des Temperaturmaximums Tₘₐₓ und dem Abklingen der Polymerisation wurde diese durch 1,15 ppm/h Methylisobutylketonhydroperoxid erneut gestartet. Dadurch entstanden im Rohrreaktor insgesamt zwei Temperaturmaxima Tₘₐₓ, welche beide unterhalb von 270°C lagen.

Das hierbei resultierende bekannte Ethylenhomopolymerisat wurde wie im Vergleichsbeispiel A beschrieben aufgearbeitet, zwischengelagert, untersucht und weiterverarbeitet. Die hierbei erhaltenen Daten wurden denen der Beispiele 1 bis 8 in der Tabelle gegenübergestellt. Der Vergleich der Daten belegt, wie nachteilig das bekannte Verfahren ist. Insbesondere wird ein Ethylenhomopolymerisat erhalten, welches eine Dichte von weniger als 921,5 kg/m³ hat.

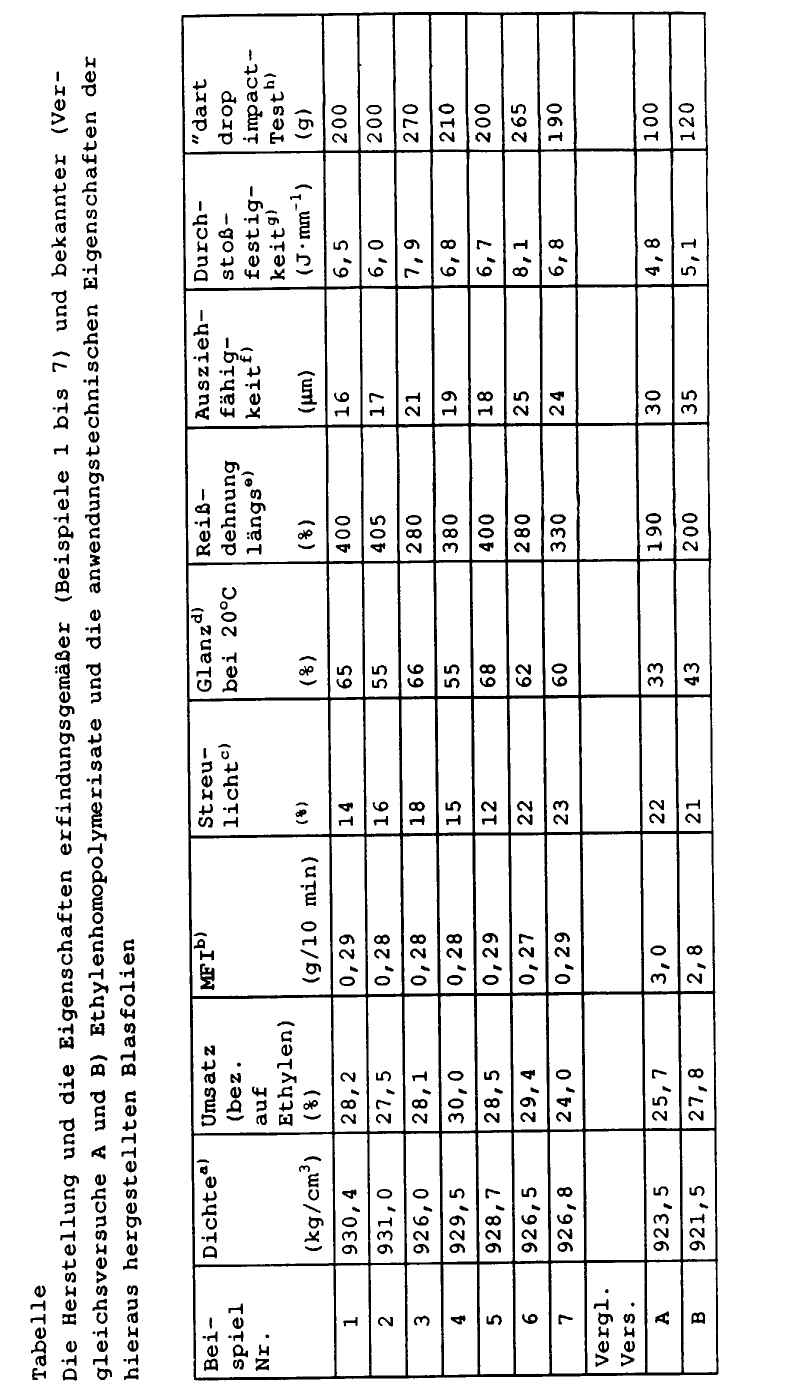

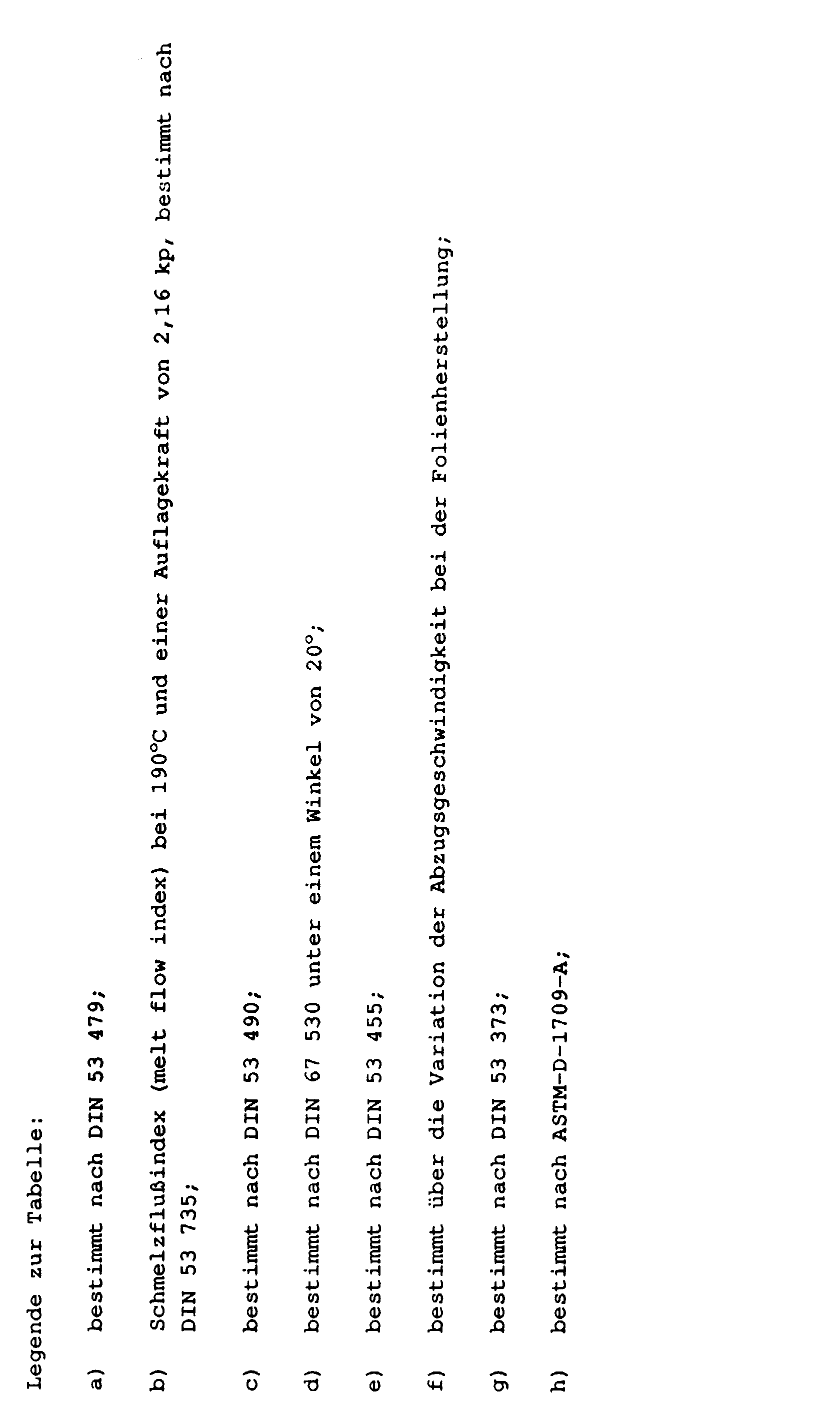

## Patentansprüche

1. Ethylenhomopolymerisate und -copolymerisate aus überwiegenden Anteilen von Ethylen und untergeordneten Anteilen von mit Ethylen polymerisierbaren Comonomeren mit einer Dichte von 925 bis 940 kg/m³, einem Schmelzflußindex (Melt-Flow-Index, MFI) bei 190°C und einer Auflagekraft von 2,16 kp von < 1 g/10 min, herstellbar durch radikalische Polymerisation der Monomeren bei Drücken von 500 bis 5000 bar, Reaktionstemperaturen T von 40 bis 320°C mittels eines Initiators unter praktischem Ausschluß von Sauerstoff in mindestens n = 3 Polymerisationsstufen, wobei man in der ersten Stufe die Gesamtmenge oder den überwiegenden Teil der Monomeren mittels eines Teils des benötigten Initiators so lange der Polymersiation unterwirft, bis diese praktisch zum Stillstand gekommen ist, danach dem um 20 bis 60°C unter Tₘₐₓ, abgekühlten Gemisch einen weiteren Teil des Initiators und gegebenenfalls der Monomeren zusetzt und diesen Vorgang in den Folgestufen bis zur n-ten Stufe wiederholt, mit der Maßgabe, daß zumindest die in der n-ten Stufe verwendeten Initiatoren eine Halbwertstemperatur von 90 bis 260°C aufweisen und daß die maximale Reaktionstemperatur Tₘₐₓ zumindest in der n-ten Stufe bei oder oberhalb 270°C liegt.

2. Verfahren zur Herstellung von Ethylenhomopolymerisaten und -copolymerisaten aus überwiegenden Anteilen von Ethylen und untergeordneten Anteilen von mit Ethylen copolymerisierbaren Comonomeren mit einer Dichte von 925 bis 940 kg/m³, einem Schmelzflußindex (Melt-Flow-Index, MFI) bei 190°C und einer Auflagekraft von 2,16 kp von < 1 g/10 min. durch Polymezisation der betreffenden Monomeren bei Drücken von 500 bis 5000 bar und Reaktionstemperaturen T oberhalb 40°C mittels eines Initiators unter praktischem Ausschluß von Sauerstoff in mindestens n = 3 Polymerisationsstufen, wcbei man in der ersten Stufe die Gesamtmenge oder den überwiegenden Teil der Monomeren mittels eines Teils des benötigten Initiators so lange der Polymerisaticn unterwirft, bis diese praktisch zum Stillstand gekommen ist, danach dem um 20 bis 60°C unter Tₘₐₓ, abgekühlten Gemisch einen weiteren Teil des Initiators und gegebenenfalls der Monomeren zusetzt und diesen Vorgang in den Folgestufen bis zur n-ten Stufe wiederholt, mit der Maßgabe, daß die in der n-ten Stufe verwendeten Initiatoren eine Halbwertstemperatur von 90 bis 260°C aufweisen, dadurch gekennzeichnet, daß die Reaktionstemperatur T bei 40 bis 320°C liegt und daß die maximale Reaktionstemperatur Tₘₐₓ zumindest in der n-ten Stufe bei oder oberhalb 270°C liegt.

3. Verwendung der (Co)Polymerisate gemäß Anspruch 1 oder der gemäß Anspruch 2 hergestellten (Co)Polymerisate zur Herstellung von Folien, Überzugsmaterialien und Photolacken.

## Claims

1. An ethylene homopolymer or ethylene copolymer comprising predominant amounts of ethylene and minor amounts of comonomers polymerizable with ethylene, having a density of from 925 to 940 kg/m³ and a melt flow index (MFI) of < 1 g/10 min at 190°C and at an applied force of 2.16 kp, which can be prepared by free radical polymerization of the monomers at from 500 to 5000 bar and reaction temperatures T of from 40 to 320°C by means of an initiator with virtually complete exclusion of oxygen in at least n = 3 polymerization stages, wherein, in the first stage, the total amount or the predominant part of the monomers is subjected to polymerization by means of a part of the required initiator until the polymerization has virtually come to a stop, a further part of the initiator and, if required, of the monomers is then added to the mixture cooled by 20-60°C below Tₘₐₓ, and this process is repeated in the subsequent stages up to the n th stage, with the provisos that at least the initiators used in the n th stage have a half-life temperature of from 90 to 260°C, and that the maximum reaction temperature Tₘₐₓ is 270°C or higher, at least in the n th stage.

2. A process for the preparation of an ethylene homopolymer or ethylene copolymer comprising predominant amounts of ethylene and minor amounts of comonomers copolymerizable with ethylene, having a density of from 925 to 940 kg/m³ and a melt flow index (MFI) of < 1 g/ 10 min at 190°C and at an applied force of 2.16 kp, by polymerizing the relevant monomers at from 500 to 5000 bar and reaction temperatures T above 40°C by means of an initiator with virtually complete exclusion of oxygen in at least n = 3 polymerization stages, in which, in the first stage, the total amount or the predominant part of the monomers is subjected to the polymerization by means of a part of the required initiator until the polymerization has virtually come to a stop, a further part of the initiator and, if required, of the monomers is then added to the mixture cooled by 20-60°C below Tₘₐₓ and this process is repeated in the subsequent stages until the n th stage, with the proviso that the initiators used in the n th stage have a half-life temperature of from 90 to 260°C, wherein the reaction temperature T is 40 to 320°C and the maximum reaction temperature Tₘₐₓ is 270°C or higher, at least in the n th stage.

3. Use of the (co)polymer as claimed in claim 1 or of the (co)polymer prepared as claimed in claim 2 for the production of films, coating materials and photoresists.

## Revendications

1. Homopolymères d'éthylène et copolymères composés d'éthylène en majeure partie et de proportions mineures de comonomères polymérisables avec l'éthylène, présentant une masse volumique de 925 à 940 kg/m³ et un indice d'écoulement à l'état fondu (Melt Flow Index, MFI) de moins de 1 g/10 min à 190°C et sous une force appliquée de 2,16 kp, pouvant etre préparés par polymérisation radicalaire des monomères sous des pressions de 500 à 5000 bar, à des températures de réaction T de 40 à 320°C, au moyen d'un amorceur, pratiquement en l'absence d'oxygène, en au moins n = 3 étapes de polymérisation, par un procédé dans lequel, dans la première étape, on soumet la quantité totale ou la majeure partie des monomères, au moyen d'une partie de l'amorceur nécessaire, à la polymérisation jusqu'à ce que celle-ci se soit pratiquement arrêtée, après quoi on ajoute, au mélange refroidi à 20 à 60°C au-dessous de Tₘₐₓ, une autre partie de l'amorceur et éventuellement des monomères, et on répète cette opération dans les étapes suivantes jusqu'à la nième étape, étant spécifié qu'au moins les amorceurs utilisés dans la nième étape présentent une température de demi-réaction de 90 à 250°C et que la température de réaction maximale Tₘₐₓ se situe, au moins dans la nième étape, à 270°C ou au-dessus de cette valeur.

2. Procédé de préparation d'homopolymères d'éthylène et de copolymères composés d'éthylène en majeure partie et de proportions mineures de comonomères polymérisables avec l'éthylène, présentant une masse volumique de 925 à 940 kg/m³ et un indice d'écoulement à l'état fondu (Melt Flow Index, (MFI) de moins de 1 g/10 min à 190°C et sous une force appliquée de 2,16 kg, par polymérisation des monomères en question sous des pressions de 500 a 5000 bar, à des températures de réaction T supérieures à 40°C, au moyen d'un amorceur, pratiquement en l'absence d'oxygène, en au moins n = 3 étapes de polymérisation, procédé dans lequel, dans la première étape, on soumet la quantité totale ou la majeure partie des monomères, au moyen d'une partie de l'amorceur nécessaire, à la polymérisation jusqu'à ce que celle-ci se soit pratiquement arrêtée, après quoi on ajoute, au mélange refroidi à 20 à 60°C au-desosus de Tₘₐₓ, une autre partie de l'amorceur et éventuellement des monomères, et on répète cette opération dans les étapes suivantes jusqu'à la nième étape, étant spécifié que les amorceurs utilisés dans la nième étape présentent une température de demi-réaction de 90 à 260°C, caractérisé en ce que la température de réaction T se situe entre 40 et 320°C, et en ce que la température de réaction maximale Tₘₐₓ se situe, au moins dans la nième étape, à 270°C ou au-dessus de cette valeur.

3. Utilisation des (co)polymères selon la revendication 1 ou des (co)polymères préparés selon la revendication 2 pour la fabrication de feuilles, de matériaux de revêtement et de laques photosensibles.
